(19)

Europäisches Patentamt

European Patent Office

Office européen des brevets

(11)   **EP 4 030 355 A1**

(12)   **EUROPEAN PATENT APPLICATION**

(43) Date of publication:
**20.07.2022 Bulletin 2022/29**

(21) Application number: **21305037.0**

(22) Date of filing: **14.01.2021**

(51) International Patent Classification (IPC):
**G06N 7/00** (2006.01)      **G06N 5/00** (2006.01)
**G06N 3/04** (2006.01)      **G06N 3/08** (2006.01)

(52) Cooperative Patent Classification (CPC):
**G06N 7/005; G06N 3/0454; G06N 3/08;**
**G06N 5/003**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Naver Corporation**
**Seongnam-si, Gyeonggi-do 13561 (KR)**

(72) Inventors:
• **Perez, Julien**
  **38000 Grenoble (FR)**
• **Sors, Arnaud**
  **38000 Grenoble (FR)**

(74) Representative: **Grünecker Patent- und**
**Rechtsanwälte**
**PartG mbB**
**Leopoldstraße 4**
**80802 München (DE)**

(54)   **NEURAL REASONING PATH RETRIEVAL FOR MULTI-HOP TEXT COMPREHENSION**

(57)   A method for sequential retrieval of reasoning paths relevant for answering a question from a knowledge base is disclosed. The method comprises selecting, based on a lexical relevance, candidate paragraphs from a knowledge base for extending one or more current reasoning paths. The method further comprises determining selection probabilities for extending the one or more current reasoning paths with the candidate paragraphs, wherein determining the selection probabilities comprises constructing extended reasoning paths each comprising a current reasoning path and a candidate paragraph, and employing a neural network scoring model to determine scores for the extended reasoning paths, wherein the scores indicate the selection probabilities. The method further comprises selecting for answering the question one or more of the constructed extended reasoning paths as the one or more current reasoning paths based on the selection probabilities.

FIG. 4

**Description**

**TECHNICAL FIELD**

This disclosure relates to systems and methods for open domain question answering by machine reading.

**BACKGROUND**

State-of-the-art approaches for open domain question answering leverage deterministic models such as TF-IDF or BM25 to retrieve a predefined fixed set of documents from which a span extractor model identifies the answer to the question posed (Danqi Chen et al: "Reading Wikipedia to answer open-domain questions", in ACL, 2017; Shuohang Wang et al: "R3: Reinforced ranker-reader for open-domain question answering", in AAAI, 2018; Jinhyuk Lee et al: "Ranking paragraphs for improving answer recall in open-domain question answering", in: EMNLP, 2018; Wei Yang: "End-to-end open-domain question answering with BERTserini', in NAACL Demonstrations, 2019). However, such approaches employing non-learned retrievers usually fail when challenged with multi-hop question answering tasks that require finding several documents as pieces of evidence that often have little lexical overlap or even semantic link to the question.

Other recent open domain question answering methods have proposed end-to-end models to jointly retrieve and read documents (Minjoon Seo et al: "Real-time open-domain question answering with dense-sparse phrase index", in ACL, 2019; Kenton Lee et al: "Latent retrieval for weakly supervised open domain question answering", in ACL, 2019). These approaches, however, fail to answer entity-centric questions because compressing the necessary information into an embedding space does not capture lexical information in entities.

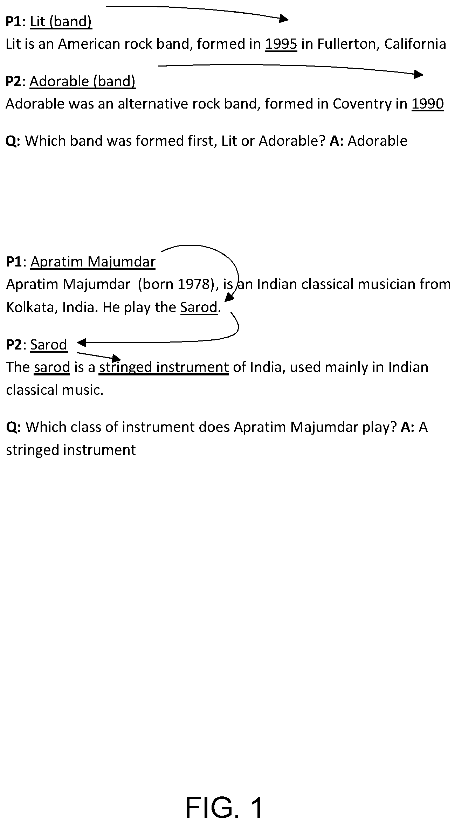

Figure 1 of this disclosure shows exemplary reasoning paths requiring entity-based multi-hop reasoning. The first example on the top requires a comparison-type reasoning path and the second example on the bottom requires a bridge-type reasoning path. In both cases, the relevance of the first sentence and the relevance of the second sentence required for answering the question are not mutually independent for the given question. This property strongly questions classic information retrieval techniques that assume independence of the relevance of documents for a given question. These examples show that the extraction scheme needs to be conditioned by the data source so that the previously retrieved evidences and the data source condition the evidence extraction process for additional evidences. As the examples of Figure 1 show, it is necessary to estimate the inter-document relevance of each document. Independent retrieval of a fixed list of documents will not capture the necessary relationships between evidence documents. In particular, bridge entities require an approach that includes inter-document relationship estimation.

However, the approaches of the prior art do not provide for evidence retrieval conditioned on the information available on previously retrieved evidences. For example, the approaches of Jinhyuk Lee et al and Minjoon Seo et al introduce fully general models that retrieve a small subset of candidate documents directly from Wikipedia, but do not involve conditioning evidence documents on the information available on previously selected documents. The assumption of independence of retrieval of evidence from previously retrieved evidence has been chosen mainly for scalability reasons, but, as exemplified in Figure 1, this limits quality of retrieval in multi-hop retrieval settings.

To cope with the further challenge of entity-centric questions, approaches of the prior art propose guiding retrievers by meta-data and entities, such as by employing hyper-links to connect documents for multi-hop open-domain question answering. Such approaches try to reduce the search complexity by pruning the reasoning paths to a connected graph. For example, Ming Ding et al: "Cognitive graph for multi-hop reading comprehension at scale", in ACL, 2019, proposes adding entity links between documents for multi-hop question answering to extend the list of retrieved documents. The described approach retrieves evidence documents offline and a TF-IDF-based retriever followed by a reading comprehension model to jointly predict the next next-hop spans to extend the reasoning chain based on the presence of such entities. However, this approach still relies on a fixed list of documents that are retrieved independently from each other. Similarly, the entity-centric information retrieval approach of Ameya Godbole et al: "Multi-step entity-centric information retrieval for multi-hop question answering", Proceedings of the 2nd Workshop on Machine Reading for Question Answering, 2019, uses a method of entity linking for multi-hop retrieval. In particular, these approaches do not learn to retrieve reasoning paths sequentially.

Other approaches of the prior art involve iterative retrieval processes. For example, Rajarshi Das et al: "Multi-step retriever-reader interaction for scalable open-domain question answering", in ICLR, 2019, proposes a multi-step reasoner that repeats the retrieval process for a fixed number of steps, whereby the model interacts with a trained reading comprehension model by reformulating the question in a latent space. Other approaches involving iterative retrieval processes are described by Yair Feldman and Ran El-Yaniv: "Multi-hop paragraph retrieval for open-domain question answering", in ACL, 2019, and Peng Qi et al: "Answering complex open-domain questions through iterative query generation", in EMNLP, 2019. A recent approach of Akari Asai et al: "Learning to Retrieve Reasoning Paths over Wikipedia Graph for Question Answering", arXiv 1911.10470, proposes a graph-based recurrent retrieval approach that learns to retrieve reasoning paths over the Wikipedia graph to answer multi-hop open-domain questions.

However, these approaches do not allow for retrieving reasoning paths of arbitrary length because they involve hard-coded termination conditions. Hence, these models fail to provide answers to questions when the hard-coded termination condition terminates search before sufficient evidence has been retrieved.

## SUMMARY

To address the described shortcomings of the state of the art, the present disclosure relates to a neural retrieval approach that learns to select sequences of evidence paragraphs as reasoning paths, sequentially retrieving each evidence paragraph conditioned on the sequence of previously retrieved evidence paragraphs. The retrieval approach hence allows the user to identify, from among a large knowledge base, a minimal set of evidence paragraphs required for answering a question.

According to an embodiment of the invention, a computer-implemented method for sequential retrieval of reasoning paths relevant for answering a question from a knowledge base is disclosed, wherein each reasoning path contains a sequence of paragraphs from the knowledge base. The method comprises selecting candidate paragraphs from a knowledge base for extending one or more current reasoning paths, wherein selecting the candidate paragraphs employs a relevance ranking that ranks a lexical relevance of paragraphs from the knowledge base to the question and to paragraphs in the current reasoning paths.

The method proceeds by determining selection probabilities for extending the one or more current reasoning paths with the candidate paragraphs, wherein determining the selection probabilities comprises constructing extended reasoning paths each comprising a current reasoning path and a candidate paragraph and employing a neural network scoring model to determine scores for the extended reasoning paths, wherein the scores indicate the selection probabilities. The method further comprises selecting for answering the question one or more of the constructed extended reasoning paths as the one or more current reasoning paths based on the selection probabilities.

According to an aspect, the method may further comprise estimating an answer likelihood that an extended candidate reasoning path allows inferring an answer to the question.

According to an embodiment, the steps of selecting the candidate paragraphs, determining the selection probabilities for extending the one or more current reasoning paths with the candidate paragraphs, selecting the one or more extended reasoning paths, and estimating the answer likelihood are repeated until the answer likelihood is above a predetermined threshold likelihood.

According to another aspect, selecting the candidate paragraphs from the knowledge base comprises selecting, for each reasoning path in the one or more current reasoning paths, a number of paragraphs from the knowledge base with a highest relevance ranking as respective candidate paragraphs. The extended reasoning paths may then be constructed by combining, for each reasoning path in the one or more current reasoning paths, the reasoning path with a paragraph from the respective candidate paragraphs.

According to yet another aspect, selecting the one or more of the constructed extended reasoning paths as the one or more current reasoning paths comprises pruning the number of extended reasoning paths based on selecting extended reasoning paths with highest combination scores, wherein a combination score of an extended reasoning path is based on combining the selection probabilities for selecting each paragraph in the extended reasoning path.

According to an embodiment, the neural network scoring model employed for scoring the extended reasoning paths comprises a multi-head transformer neural network configured for receiving the token representations for the question, the token representations for each paragraph in an extended reasoning path, and a trainable variable. The neural network scoring model may further comprise a fully connected layer configured for generating the score from the transformed trainable variable outputted by the multi-head transformer neural network.

According to another embodiment, the neural network scoring model employed for scoring the extended reasoning paths comprises a neural network tokenizer configured for generating token representations for the question and the token representations for each paragraph in an extended reasoning path from corresponding [CLS] tokens (i.e., tokens representing a sequence starting point).

According to an aspect, the relevance ranking employed for wherein selecting the candidate paragraphs is based on a bag-of-words representation.

According to another aspect, selecting the extended reasoning paths is based on performing an MCTS (Monte Carlo tree search) search algorithm or on performing a beam search algorithm. According to another embodiment, a computer-implemented method for training a neural network system comprising a neural network scoring model for evidence retrieval from a knowledge base to answer a question is disclosed. The method comprises selecting a set of training questions and, for each training question of the set of training questions, selecting positive evidence paragraphs and negative evidence paragraphs. The method further comprises training the neural network scoring model by employing the set of questions and the positive evidence paragraphs and negative evidence paragraphs, wherein training the neural network scoring model comprises minimizing a loss between true reasoning paths and false reasoning paths, wherein the true reasoning paths are constructed from the set of positive evidence paragraphs, and wherein the false reasoning paths are constructed by randomly selecting paragraphs from the set of positive evidence paragraphs and the set of negative evidence paragraphs.

According to an aspect, the method may further comprise training an answer inference network for estimating the likelihood that a reasoning path allows inferring an answer to a question. Training the answer inference network comprises employing a set of true reasoning paths and a distractor dataset to construct negative examples of reasoning paths by removing evidence paragraphs from the true reasoning paths and adding paragraphs from the distractor dataset.

According to another aspect, the set of negative evidence paragraphs is selected with a token-based retrieval method. For example, the set of negative evidence paragraphs may be selected with a TF-IDF approach, an approached based on BM25, or with a same-document sampling approach.

According to another embodiment, an apparatus comprising one or more processors is disclosed, the one or more processors being configured to perform one of the disclosed computer-implemented methods.

According to yet another embodiment, one or more computer-readable storage media is described, having computer-executable instructions stored thereon, which, when executed by one or more processors perform the computer-implemented method of one of the disclosed computer-implemented methods.

## BRIEF DESCRIPTION OF THE FIGURES

The accompanying drawings are incorporated into the specification for the purpose of explaining the principles of the embodiments. The drawings are not to be construed as limiting the invention to only the illustrated and described embodiments or to how they can be made and used. Further features and advantages will become apparent from the following and, more particularly, from the description of the embodiments as illustrated in the accompanying drawings, wherein:

**Figure 1** illustrates exemplary reasoning paths;

**Figure 2** illustrates a block diagram of a neural network scoring model employed in embodiments;

**Figure 3** illustrates a block diagram of a machine learning system for evidence retrieval according to an embodiment;

**Figure 4** illustrates a process flow diagram of a method for evidence retrieval according to an embodiment;

**Figure 5** illustrates a process flow diagram of a method of training a machine learning system for evidence retrieval according to an embodiment; and

**Figure 6** illustrates an example architecture in which the disclosed methods and systems may be implemented.

## DETAILED DESCRIPTION

The present disclosure relates to identifying reasoning paths that correspond to sequences of evidence selected from a large knowledge base. In the embodiments described herein, evidences are text paragraphs. In addition to being applied to knowledge retrieval for text, the described approach could also be applied to text-image search.

The present disclosure describes methods and systems for selecting paragraphs $p_1,.., p_k$ from a knowledge base such as Wikipedia, each paragraph comprising one or more sentences that contain evidence for answering a question. Retrieving paragraphs specifically leverages structural information in texts in that paragraphs usually contain related information.

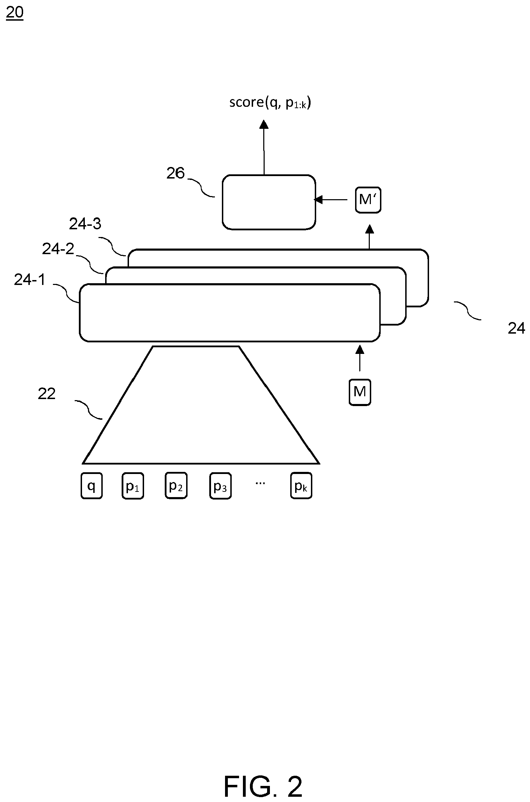

Figure 2 illustrates transformer-based scoring model 20 employed by the machine learning system of the present disclosure for scoring a candidate reasoning path with respect to a question q.

Question q and each paragraph of a candidate reasoning path are transformed by neural network tokenizer 22 to corresponding token representations that are inputted to multi-head transformer neural network 24. In an embodiment, neural network tokenizer 22 may employ a neural network implementing an autoregressive pre-training method. In particular embodiments, the autoregressive pre-training method may comprise learning bi-directional contexts. Neural network tokenizer 22 may be configured to generate a token representation for each paragraph of the candidate reasoning paths from transformed [CLS] tokens (i.e., tokens representing a sequence starting point). Neural network tokenizer 22 may be configured to process sentences prepended with [CLS] tokens that mark the beginning of the sentence. When processing a paragraph, neural network tokenizer 22 may process concatenated sentences of the paragraph, each prepended by a [CLS] token. The token representation for a paragraph may be obtained from the transformed [CLS] token of the last sentence in the paragraph.

Neural network tokenizer 22 may implement an artificial neural network trained with a generalized autoregressive pre-training method that enables learning bidirectional contexts by maximizing the expected likelihood over all permutations of the factorization order. Neural network tokenizer may further integrate a segment recurrence mechanism and relative encoding scheme. In an embodiment, neural network tokenizer 22 may implement XLNet as described in Zhilin Yang et al: "XLNet: Generalized Autoregressive Pretraining for Language Understanding", arXiv abs/1906.08237, 2019, which is herein incorporated in its entirety. Neural network tokenizer 22 may thereby contextualize the input sequence while conditioning previously encoded sentences using a memory. Hence, the token representation obtained from the transformed [CLS] token of the last sentence in the paragraph may represent a summary of the paragraph.

Transformer-based scoring model 20 is configured to provide the token representations for the question followed by token representations for each paragraph of the reasoning path, as determined by neural network tokenizer 22, to multi-head transformer neural network 24. A trainable variable M is appended to the token representations for the question and the paragraphs of the reasoning path.

Multi-head transformer neural network 24 comprises a stack of multi-headed transformer layers 24-1, ..., 24-3 that subsequently transform the input tokens. For illustration, a stack of three multi-headed transformer layers 24-1, ..., 24-3 is displayed in Figure 2. Each transformer layer 24-1,..., 24-3 involves a set of 3 linear transformations of dimension $d_k$ of each element of the input sequence, the so-called query Q, key K and value V. Each transformer layer 24-1,..., 24-3 applies a dot attention mechanism according to

$$\text{Attention}(Q, K, V) = \text{softmax}\left(\frac{QK^T}{\sqrt{d_k}}\right)V \quad (1)$$

Multi-head transformer neural network 24 may be configured as described in Ashish Vaswani et al: "Attention is all you need", in Advances in neural information processing systems, 2017, which is herein incorporated in its entirety.

After being transformed by multi-head transformer neural network 24, the position of trainable variable M is transformed to variable M'. Variable M' hence represents a global representation of the sequence of question q and paragraphs $p_1$, ..., $p_k$. This architecture, which uses a dedicated input slot for sequence level scoring, is similar to the use of the [CLS] token in recent parametric language models to represent a summary of an input sequence in downstream tasks.

An output layer of multi-head transformer neural network 24 is processed by fully connected layer 26 to process M'. Finally, the output of fully connected layer 26 is employed as score, $score(q, p_{1:k})$, for question q and candidate reasoning path $p_1$, ..., $p_k$. M' hence serves as a decision support to compute $score(q, p_{1:k})$.

In an embodiment illustrated in Fig. 2, multi-head transformer neural network 24 employs three transformer layers 24-1, 24-2, 24-3 that subsequently process the input sequence of tokens. In embodiments, each transformer layer has six parallel heads that each comprise three transformer layers. In these embodiments, the hidden dimension of each transformer head is 64. Thus, in these embodiments, the input to fully connected layer 26 has the dimension 64 x 6.

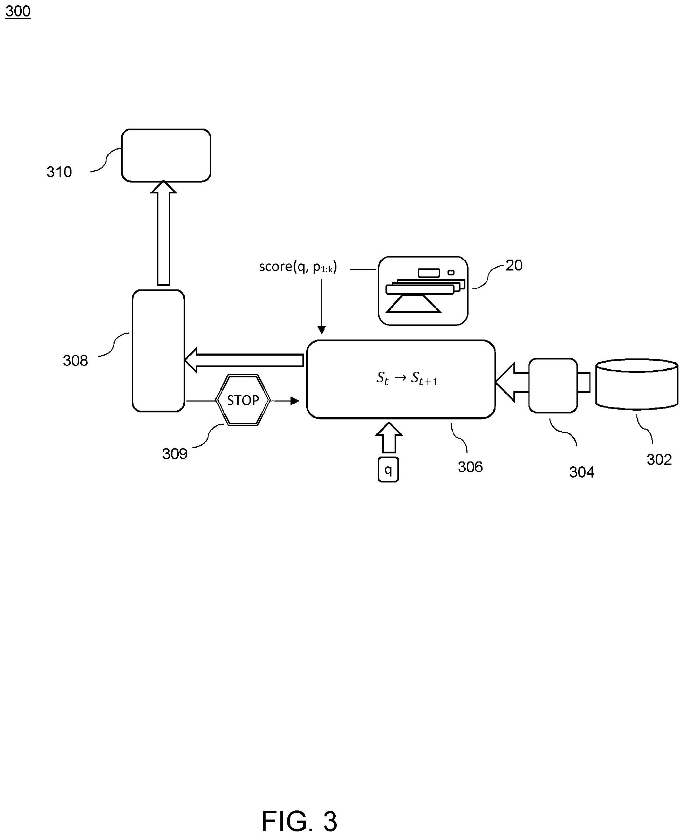

Figure 3 illustrates a block diagram of a machine learning system 300 for evidence retrieval from knowledge base 302 for answering a question, building on transformer-based scoring model 20 of Figure 2. Knowledge base 302 may be a large text corpus like the Wikipedia online encyclopedia that contains a multitude of text paragraphs.

Machine learning system 300 comprises retriever module 304 for selecting candidate sets of paragraphs from knowledge base 302. Retriever module 304 is configured to receive textual input such as paragraphs and the question text. Retriever module 302 may be configured to select paragraphs from knowledge base 302 that have a highest relevance ranking for the paragraphs and the question. In embodiments, the retrieval of paragraphs may be based on a bag-of-words representation, such as by employing BM25, that yields relevance scores employed as relevance ranking. In other embodiments, a predetermined number of paragraphs with highest relevance ranking may be retrieved. In still other embodiments, the predetermined number of paragraphs in the candidate set is between 20 and 50.

Employing ranking based on a bag-of-words representation overcomes the problem that fully trainable retrievers based on representation of sentences perform poorly for entity-centric questions. The issue with fully trainable retrievers with entity-centric questions seems to be mainly that distribution and representations do not explicitly maintain lexical information as described in Kenton Lee et al cited above.

Machine learning system 300 further comprises search module 306 configured for searching for optimal reasoning paths. Search module 306 is configured for performing sequential search and retrieval in cooperation with retriever module 304 and transformer-based scoring model 20. Search module 306 iteratively constructs reasoning path sets over steps t=1,2,... n employing candidate paragraphs retrieved by retriever module 304.

At t=1, a reasoning path set $S_1$ is initialized. $S_1$ contains a predetermined number of reasoning paths (i.e., current reasoning paths), wherein each reasoning path is only composed of a first paragraph that initializes the reasoning path. To select paragraphs for $S_1$, retriever module 304 may retrieve, from knowledge base 302, a predetermined number of top-ranked paragraphs according to lexical overlap with the question.

At step t, search module 306 considers a reasoning path set $S_t$ containing a number of reasoning paths, wherein each reasoning path in the reasoning path set $S_t$ is a sequence of t paragraphs that have been selected previously from knowledge base 302. In step t, machine learning system 300 retrieves paragraphs from knowledge base 302 to extend each reasoning path in reasoning path set $S_t$ to thereby construct reasoning path set $S_{t+1}$ containing reasoning paths of t+1 paragraphs.

A specific reasoning path in the reasoning path set may be the sequence $p_1$, $p_2$, ..., $p_k$ of paragraphs from the candidate set. The sequential search may include determining, for each such reasoning path in the current set of reasoning paths, a selection probability $P(p_{k+1} | q, p_1, p_2, ..., p_k)$, or $P(p_{k+1} | q, p_{1:k})$ for short, as a probability of selecting a paragraph from the candidate set to extend the reasoning path to a candidate reasoning path. In particular, the selection probability $P(p_{k+1} | q, p_{1:k})$ is thereby conditional on the previously selected paragraphs $p_1$, $p_2$, ..., $p_k$ of the particular reasoning path. In particular, $P(p_{k+1} | q, p_{1:k}) \neq P(p_{k+1} | q)$, which reflects the fact that paragraphs providing evidence for answering the question q do not necessarily have lexical overlap with the question. When questions must be answered with multiple hops, paragraph $p_{k+1}$ may become relevant only in the context of the previously selected $p_{1:k}$.

For each reasoning path $p_1$, $p_2$, ..., $p_k$ from the current set of reasoning paths, search module 306 may determine the selection probability $P(p_{k+1} | q, p_{1:k})$ of selecting a particular $p_{k+1}$ from the candidate set by feeding the candidate reasoning path $p_1$, $p_2$, ..., $p_k$, $p_{k+1}$ to transformer-based scoring model 20 which outputs score(q, $p_{1:k+1}$). This score is employed as an estimate of the selection probability $P(p_{k+1} | q, p_{1:k})$.

Search module 306 may determine, based on the selection probability $P(p_{k+1} | q, p_{1:k})$, whether candidate reasoning path $p_1$, $p_2$, ..., $p_k$, $p_{k+1}$ should be included in the reasoning path set.

In more detail, the number of reasoning paths in the reasoning path set may be a predetermined beam size. To limit the search tree, search module 306 may be configured to, for each reasoning path in the reasoning path set, select a number of paragraphs $p_{k+1}$ with largest selection probabilities $P(p_{k+1} | q, p_{1:k})$ to extend the reasoning path. The number of selected paragraphs may correspond to the beam size. For the resulting reasoning paths of length k+1, a total score may be determined, and the number of the resulting reasoning paths of length k+1 may be pruned to the beam size by removing reasoning paths with low total scores.

Search module 306 may determine a total score for each reasoning path $E = [p_i, ..., p_k]$ by multiplying the probabilities of selecting each paragraph as

$$\text{score}_{\text{total}}(E) = P(p_1|q)P(p_2|q, p_1)...P(p_k|q, p_{1:k-1}) \qquad (2)$$

Hence, in an embodiment, the sequential search performed by search module 306 is a beam search. In an alternative embodiment, the sequential search performed by search module 306 is a Monte Carlo tree search (MCTS) algorithm.

Search module 306 may output a predetermined number of top reasoning paths with highest combined scores.

Hence, machine learning system 300 relies on a double indexation, one provided by neural network tokenizer 22, and one provided by retriever module 304. This solution allows for maintaining an efficient matching property of the named entities. In particular, the sequential selection process, as explained above, is supported by a contextualized representation of the sentence which allows the system to cope with the lack of lexical overlap between paragraphs necessary to answer multi-hop questions.

Machine learning system 300 further comprises answer inference network 308 that is configured for receiving a current top-ranked reasoning path from search module 306. Answer inference network 308 is configured for determining a likelihood that the received candidate reasoning path contains an answer to the question. When the determined likelihood that the paragraphs selected in the received candidate reasoning path allow inferring an answer to the question is larger than a threshold, answer inference network 308 outputs a stop signal 309 to search module 306 so that the sequential search is terminated and the current top-ranked candidate reasoning paths are outputted at block 310. In particular embodiments, answer inference network 308 may implement a fine-tuned BertQA model.

This selection procedure performed by search module 306 hence allows capturing reasoning paths and not only independent paragraphs. Furthermore, the reasoning paths may be of arbitrary length.

Answer inference network 308 may further be configured to determine and output an answer to the question at block 310 by extracting and combining information contained in the paragraphs of the reasoning path set.

In an embodiment, answer inference network 308 may comprise a BertQA model (Ankit Chadha and Rewa Sood: "BERTQA -- Attention on Steroids", arXiv:1912.10435) and a fully connected layer, wherein the fully connected layer is configured to receive the transformed [CLS] token of a reasoning path. The transformed [CLS] token represents a summary of the reasoning path. The fully connected layer may be configured to compute the likelihood that the candidate reasoning path allows inferring an answer to the question from the transformed [CLS] token.

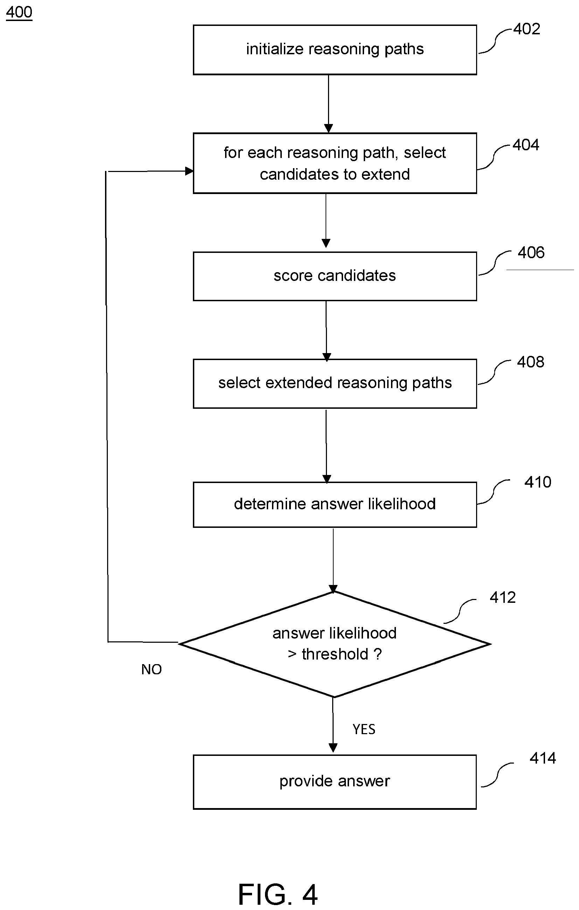

Figure 4 relates to a method 400 for employing a machine learning system for paragraph retrieval from a knowledge base for answering a question.

Reasoning paths considered in method 400 may form a reasoning path set of predetermined size, wherein the length of reasoning paths in the reasoning path set is iteratively increased.

Method 400 comprises step 402 of initializing reasoning paths by initializing each reasoning path included in the reasoning path set with top-ranked paragraphs retrieved from a knowledge base, wherein the ranks are determined by a lexical overlap of the paragraphs with the question.

Method 400 comprises, in method steps 404 to 412, iteratively retrieving and scoring paragraphs from the knowledge base to extend each reasoning path in the reasoning path set, until it is determined that a reasoning path in the reasoning path set contains sufficient information for answering the question.

Method 400 comprises, for each reasoning path in the reasoning path set, step 404 of retrieving a corresponding candidate set of paragraphs for extending the reasoning paths. Determining the score may be based on calculating a lexical overlap between paragraphs from the knowledge base and the reasoning path. For example, retrieving 404 of the candidate set may employ BM25 retrieval. In embodiments, for each reasoning path, a predetermined number of top-scored candidate paragraphs from the knowledge base may be retrieved.

Method 400 further comprises step 406 of determining, for each reasoning path in the reasoning path set, a selection probability of selecting a candidate reasoning paths from the corresponding candidate set for extending the reasoning path. Each candidate reasoning path contains the paragraphs from the reasoning path followed by one of the candidate paragraphs retrieved in step 404 for the respective reasoning path. The selection probability may be estimated from a score of the candidate reasoning path as determined by the transformer-based scoring module 20 described above.

Method 400 may further comprise step 408 of pruning the reasoning path set to a predetermined number. Pruning 408 may be based on calculating total scores $score_{total}$ for reasoning paths. For a reasoning path $E = [s_i, ..., s_k]$ a total score may be calculated according to Equation (2).

Pruning 408 may comprise selecting only a predetermined number of reasoning paths with highest $score_{total}$ to remain in the reasoning path set.

Method 400 further comprises determining 410 a likelihood that one of the reasoning paths in the reasoning path set allows inferring an answer to the question.

If it is determined at 412 that for all of the reasoning paths in the current reasoning path set the likelihood that the reasoning path allows inferring an answer to the question is below the predetermined threshold, method 400 repeats method steps 404 to 410 and extends each reasoning path in the set of reasoning paths by another paragraph retrieved from the candidate set of paragraphs.

If it is determined at 412 that, for a particular reasoning path from the set of reasoning paths, the likelihood that the particular reasoning path allows inferring an answer to the question is larger than the predetermined threshold, method 400 proceeds to step 414 of outputting the reasoning path likely to allow inferring an answer and/or a determined answer. In this manner, method 400 may considerably improve information retrieval for identification of information that allows answering a question.

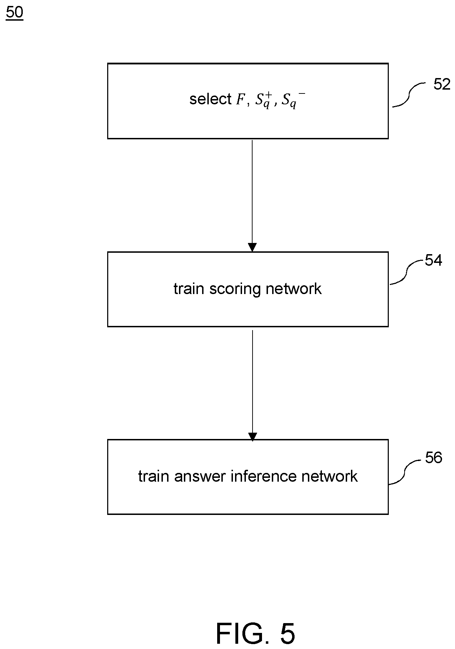

Figure 5 relates to a method 50 of training a machine learning system for information retrieval from a knowledge base for answering a question, such as system 300 described above.

Method 50 comprises step 52 selecting a set of training questions $F$, positive evidence set $S_q^+$, and negative evidence set $S_q^-$. Positive evidence set $S_q^+$ is a set of positive evidence paragraphs $p_i^+$ that contain information useful for answering training question $q \in F$, so that a true reasoning path may be constructed as a sequence of paragraphs $p_i^+$. Negative evidence set $S_q^-$ is a set of negative evidence paragraphs $p_i^-$ that contain information unrelated to question q. Selection of negative evidence paragraphs $S_q^-$ may be based on employing TF-IDF scores or on a same document sampling approach, or on another token-based retrieval method.

Training method 50 further comprises step 54 of training a transformer-based scoring model for scoring candidate reasoning paths from respective token representations of each paragraph as described above. The transformer-based scoring model is trained to sequentially discriminate between relevant and irrelevant candidate evidences by employing the pair-wise loss scheme

$$L(\theta) = \sum_{q \in F} \sum_{s^+ \in S_q^+} \sum_{s^- \in S_q^-} \max\left[0, f_\theta(q, p_1^+, ..., p_k^+) - f_\theta\left(q, p_1^{\{-,+\}}, ..., p_k^{\{-,+\}}\right) + \mu\right] \quad (3)$$

where $\mu$ is a margin term. The function $f_\theta$ corresponds to the transformations of multi-head transformer neural network 24. Training proceeds by selecting $p_1^{\{-,+\}}$ randomly from either $S_q^+$ or $S_q^-$. The loss according to Eq. (3) corresponds to a pair-wise loss scheme contrasting consistent or true reasoning paths with inconsistent or false reasoning paths which contain irrelevant or disjoint information.

Training method 50 further comprises step 56 of training an answer inference network for estimating a likelihood that a current set of evidence paragraphs allow inferring an answer to a question. For training 56 of the stopping criteria module, a set of questions and sets of true reasoning paths of equal length k are employed. During training, considered reasoning paths share the same number k of evidence paragraphs with k≤n, where n is the number of true evidence paragraphs for the given question. Because the decoding process as performed by search module 306 described above always scores candidate sequences of equal number of evidence paragraphs, this restriction to reasoning paths with the same number k of evidence paragraphs is in accordance with the use of the machine learning system.

Training 56 the answer inference network may comprise employing a distractor setting such as provided by HotpotQA distractors. Negative examples are produced by suppressing evidence sentences and adding distractor sentences to ground truth reasoning paths. The stopping criteria module may be based on a BertQA model as described above, wherein a fully connected layer is appended that receives the transformed [CLS] representation of the sequence that represents a summary of the sentence. The output of the fully connected layer may be employed to compute the probability that the given reasoning path can be employed to infer an answer to the question. Training the answer inference network may be based on minimizing a binary cross-entropy loss of the output of the fully connected layer. In embodiments, the answer inference network employs a threshold of 0.75 at test time to stop the retrieving process by the search module.

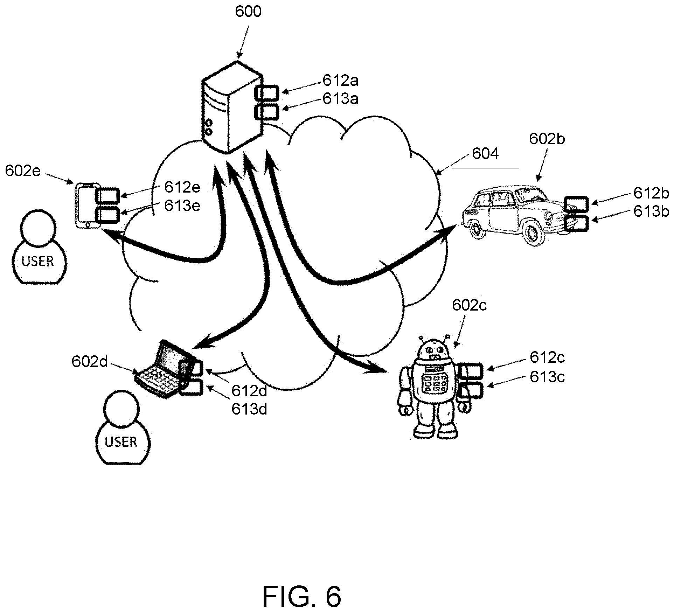

The above-mentioned systems, methods and embodiments may be implemented within an architecture such as that illustrated in Fig. 6, which comprises server 600 and one or more client devices 602 that communicate over a network 604 (which may be wireless and/or wired), such as the Internet, for data exchange. Server 600 and the client devices 602 each include a data processor 612 and memory 613, such as a hard disk. Client devices 602 may be any devices that communicate with server 600, including autonomous vehicle 602b, robot 602b, computer 602d, or cell phone 602e. In an embodiment, the machine learning system 300 according to the embodiments of Figs. 2 and 3 may be implemented on computing means of server 600. Server 600 may be employed for training machine learning system 300 as described with reference to Figure 5. Trained machine learning system 300 may be stored on server memory 613a.

Server 600 may receive a question from a client device 602 and use processor 612a to evaluate trained machine learning system 300 stored on server memory 613a. Server 600 may then determine a reasoning path likely containing evidence to answer the question according to the method described with reference to Figure 4. Server 600 may provide one or more most likely reasoning paths to client device 602 that has submitted the question.

Some or all of the method steps described above may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system. Generally, embodiments can be implemented as computer program products with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor.

## EVALUATION

The disclosed machine learning system has been evaluated for a supporting fact identification task, employing the hotpot QA dataset (Zhilin Yang et al: "HotpotQA: A dataset for diverse, explainable multi-hop question answering", in EMNLP, 2018) that provides a dataset for explicit supporting fact identification. Each question in this dataset is tagged with one of two question types, the bridge type or the comparison type, characterizing the necessary reasoning scheme for answering. In the evaluation, the disclosed model has been configured with six parallel heads which each comprise three transformer layers. The hidden dimension of each transformer head has been set to 64. A pre-trained XLNet model has been employed as neural network tokenizer 22 to compute the token representation of sentences and questions, while BM25 has been employed for implementing retriever module 304. The machine learning system has been optimized with an Adams optimizer and an initial learning rate of $10^{-5}$. All parameters have been defined through cross-validation. The input to the fully connected hidden dimension is hence 64 x 6.

The disclosed machine learning system has been evaluated for supporting fact prediction for both of the two question types compared with three recent models, hierarchical graph network followed by a Semantic Retrieval (Yuwei Fang et al: "Hierarchical graph network for multi-hop question answering", 2019), cognitive graph (Ming Ding et al) and Semantic Retrieval (Yixin Nie et al: "Revealing the importance of semantic retrieval for machine reading at scale", in EMNLP, 2019) and the original baseline of Zhilin Yang et al.

The models are evaluated by the scores in Exact Match (EM) and F1 score for the two tasks.

*Table 1*

| Models | F1 | EM |
|---|---|---|
| Disclosed system | **77.1** | **51.7** |
| HGN+SemanticRetrievalMRS-IR (Fang et al) | 76.39 | 49.97 |
| Cognitive Graph (Ming Ding et al) | 70.83 | 38.67 |
| Semantic Retrieval (Yixin Nie et al) | 57.69 | 22.82 |
| Baseline (Zhilin Yang et al) | 37.71 | 3.86 |

Table 1 shows that in both F1 score and EM, the disclosed model improves the state of the art on the distractor and full Wikipedia settings of HotpotQA.

In this disclosure a novel transformer-based reasoning path retrieval approach has been described which retrieves sequences of evidence paragraphs from a knowledge base such as Wikipedia. To answer multi-hop open domain questions, a first model of the disclosed retrieval approach has a search module that learns to sequentially retrieve - given the history of previously retrieved evidence paragraphs - further evidence paragraphs to form a reasoning path. A second model of the disclosed retrieval approach has an answer inference network that learns to determine a likelihood of an answer being present in a candidate set of evidence paragraphs.

The approach of sequentially retrieving evidence paragraphs given the previously retrieved evidence paragraphs is a necessary step towards more efficient information retrieval systems and better knowledge accessibility.

In addition to improving performance as corroborated in Table 1, the described model provides insight into underlying entity relationships and the provided discreet reasoning paths are helpful in human interpretation of the reasoning process, thereby improving on the issue of explainability of machine learning systems. The disclosed approach has been described for multi-hop question answering. However, the approach can also be applied to multi-hop evidence retrieval for fact-checking.

**Claims**

1. A computer-implemented method (400) for sequential retrieval of reasoning paths relevant for answering a question from a knowledge base (302), each reasoning path containing a sequence of paragraphs from the knowledge base (302), the method comprising:

   selecting (404) candidate paragraphs from a knowledge base (302) for extending one or more current reasoning paths, wherein selecting the candidate paragraphs employs a relevance ranking that ranks a lexical relevance of paragraphs from the knowledge base to the question and to paragraphs in the current reasoning paths;
   determining (406) selection probabilities for extending the one or more current reasoning paths with the candidate paragraphs, wherein determining the selection probabilities comprises:

   constructing extended reasoning paths each comprising a current reasoning path and a candidate paragraph, and
   employing a neural network scoring model (20) to determine scores for the extended reasoning paths, wherein the scores indicate the selection probabilities;

   selecting (408) for answering the question one or more of the constructed extended reasoning paths as the one or more current reasoning paths based on the selection probabilities.

2. The computer-implemented method (400) of claim 1, further comprising estimating (410) an answer likelihood that an extended candidate reasoning path allows inferring an answer to the question.

3. The computer-implemented method (400) of claim 2, wherein the steps of selecting (404) the candidate paragraphs, determining (406) the selection probabilities for extending the one or more current reasoning paths with the candidate paragraphs, selecting (408) the one or more extended reasoning paths, and estimating (410) the answer likelihood are repeated until the answer likelihood is above a predetermined threshold likelihood.

4. The computer-implemented method (400) of one of the preceding claims, wherein selecting (404) the candidate paragraphs from the knowledge base (302) comprises selecting, for each reasoning path in the one or more current reasoning paths, a number of paragraphs from the knowledge base with a highest relevance ranking as respective candidate paragraphs, and wherein the extended reasoning paths are constructed by combining, for each reasoning path in the one or more current reasoning paths, the reasoning path with a paragraph from the respective candidate paragraphs.

5. The computer-implemented method (400) of one of the preceding claims, wherein selecting (408) the one or more of the constructed extended reasoning paths as the one or more current reasoning paths comprises pruning the number of extended reasoning paths based on selecting extended reasoning paths with highest combination scores, wherein a combination score of an extended reasoning path is based on combining the selection probabilities for selecting each paragraph in the extended reasoning path.

6. The computer-implemented method (400) of one of the preceding claims, wherein the neural network scoring model (20) employed for scoring the extended reasoning paths comprises:

a multi-head transformer neural network (24) configured for receiving the token representations for the question, the token representations for each paragraph in an extended reasoning path, and a trainable variable (M); and a fully connected layer (26) configured for generating the score from the transformed trainable variable (M') outputted by the multi-head transformer neural network (24).

7. The computer-implemented method (400) of one of the preceding claims, wherein the neural network scoring model (20) employed for scoring the extended reasoning paths comprises a neural network tokenizer (22) configured for generating token representations for the question and the token representations for each paragraph in an extended reasoning path from corresponding tokens representing a sequence starting point.

8. The computer-implemented method (400) of one of the preceding claims, wherein the relevance ranking is based on a bag-of-words representation.

9. The computer-implemented method (400) of one of the preceding claims, wherein selecting (408) the extended reasoning paths is based on performing an MCTS search algorithm or on performing a beam search algorithm.

10. A computer-implemented method (50) for training a neural network system comprising a neural network scoring model for evidence retrieval from a knowledge base (302) to answer a question, the method comprising:

selecting (52) a set of training questions and, for each training question of the set of training questions, selecting positive evidence paragraphs and negative evidence paragraphs;
training (54) the neural network scoring model by employing the set of questions and the positive evidence paragraphs and negative evidence paragraphs, wherein training (54) the neural network scoring model comprises minimizing a loss between true reasoning paths and false reasoning paths,

wherein the true reasoning paths are constructed from the set of positive evidence paragraphs, and wherein the false reasoning paths are constructed by randomly selecting paragraphs from the set of positive evidence paragraphs and the set of negative evidence paragraphs.

11. The computer-implemented method of claim 10, further comprising training (56) an answer inference network for estimating the likelihood that a reasoning path allows inferring an answer to a question.

12. The computer-implemented method (50) of claim 11, wherein training (56) the answer inference network comprises employing a set of true reasoning paths and a distractor dataset to construct negative examples of reasoning paths by removing evidence paragraphs from the true reasoning paths and adding paragraphs from the distractor dataset.

13. The computer-implemented method (50) of one of claims 10 to 12, wherein the set of negative evidence paragraphs is selected with a token-based retrieval method.

14. An apparatus (600, 602) comprising one or more processors (612), the one or more processors (612) being configured to perform the computer-implemented method (400, 50) of one of claims 1 to 13.

15. One or more computer-readable storage media (613) having computer-executable instructions stored thereon, which, when executed by one or more processors (612) perform the computer-implemented method (400, 50) of one of claims 1 to 13.

**P1**: Lit (band)

Lit is an American rock band, formed in 1995 in Fullerton, California

**P2**: Adorable (band)

Adorable was an alternative rock band, formed in Coventry in 1990

**Q:** Which band was formed first, Lit or Adorable? **A:** Adorable

**P1**: Apratim Majumdar

Apratim Majumdar (born 1978), is an Indian classical musician from Kolkata, India. He play the Sarod.

**P2**: Sarod

The sarod is a stringed instrument of India, used mainly in Indian classical music.

**Q:** Which class of instrument does Apratim Majumdar play? **A:** A stringed instrument

# FIG. 1

FIG. 2

300

310

308

309 STOP

score(q, p₁:k) $score(q, p_{1:k})$ — 20

$S_t \rightarrow S_{t+1}$

q

306

304

302

FIG. 3

400

FIG. 4

50

$$\text{select } F, S_q^+, S_q^-$$ — 52

↓

train scoring network — 54

↓

train answer inference network — 56

FIG. 5

FIG. 6

Europäisches
Patentamt

European
Patent Office

Office européen
des brevets

## EUROPEAN SEARCH REPORT

Application Number

EP 21 30 5037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Grail Quentin: "LATENT QUESTION REFORMULATION AND INFOR- MATION ACCUMULATION FOR MULTI-HOP MACHINE READING", , 25 September 2019 (2019-09-25), XP055819663, Retrieved from the Internet: URL:https://openreview.net/pdf?id=S1x63TEY vr [retrieved on 2021-06-30] * abstract; figures 1, 2 * * paragraphs [0002] - [0004], [0006] * ----- | 1,2,4-7, 9-15 | INV. G06N7/00 G06N5/00 G06N3/04 G06N3/08 |
| X | US 10 540 967 B2 (XEROX CORP [US]) 21 January 2020 (2020-01-21) * column 1, paragraph 3-5 * * column 4, line 39 - column 7, line 33 * * column 8, line 38 - column 9, line 18 * * column 9, paragraph 2 * * column 10, line 62 - column 13, line 46; figures 1, 2 * * abstract * ----- | 1-3,8, 10,11, 14,15 | |
| X | US 2020/410012 A1 (MOON SEUNGWHAN [US] ET AL) 31 December 2020 (2020-12-31) * paragraphs [0007], [0069] - [0078], [0094] - [0154] * ----- -/-- | 1,5,10, 14,15 | |

TECHNICAL FIELDS
SEARCHED      (IPC)

G06N

The present search report has been drawn up for all claims

| Place of search | Date of completion of the search | Examiner |
|---|---|---|
| Munich | 2 July 2021 | Cakiroglu Garton, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches Patentamt
European Patent Office
Office européen des brevets

# EUROPEAN SEARCH REPORT

Application Number

EP 21 30 5037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Ashish Vaswan ET AL: "Attention Is All You Need", 31st Conference on Neural Information Processing Systems (NIPS 2017), 12 June 2017 (2017-06-12), XP055506908, Retrieved from the Internet: URL:https://arxiv.org/pdf/1706.03762.pdf [retrieved on 2018-09-13] * the whole document * | 1-15 | |
| A | Jacob Devlin ET AL: "BERT: Pre-training of Deep Bidirectional Transformers for Language Understanding", , 24 May 2019 (2019-05-24), XP055723406, Retrieved from the Internet: URL:https://arxiv.org/pdf/1810.04805v2.pdf [retrieved on 2020-08-18] * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 2 July 2021 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 5037

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2021

| Patent document cited in search report | | Publication date | Patent family member(s) | | Publication date |
|---|---|---|---|---|---|
| US 10540967 | B2 | 21-01-2020 | NONE | | |
| US 2020410012 | A1 | 31-12-2020 | US | 2020410012 A1 | 31-12-2020 |
| | | | WO | 2020263711 A1 | 30-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DANQI CHEN et al.** Reading Wikipedia to answer open-domain questions. *ACL,* 2017
- **SHUOHANG WANG et al.** R3: Reinforced ranker-reader for open-domain question answering. *AAAI,* 2018
- **JINHYUK LEE et al.** Ranking paragraphs for improving answer recall in open-domain question answering. *EMNLP,* 2018
- **WEI YANG.** End-to-end open-domain question answering with BERTserini. *NAACL Demonstrations,* 2019
- **MINJOON SEO et al.** Real-time open-domain question answering with dense-sparse phrase index. *ACL,* 2019
- **KENTON LEE et al.** Latent retrieval for weakly supervised open domain question answering. *ACL,* 2019
- **MING DING et al.** Cognitive graph for multi-hop reading comprehension at scale. *ACL,* 2019
- **AMEYA GODBOLE et al.** Multi-step entity-centric information retrieval for multi-hop question answering. *Proceedings of the 2nd Workshop on Machine Reading for Question Answering,* 2019
- **RAJARSHI DAS et al.** Multi-step retriever-reader interaction for scalable open-domain question answering. *ICLR,* 2019
- **YAIR FELDMAN ; RAN EI-YANIV.** Multi-hop paragraph retrieval for open-domain question answering. *ACL,* 2019
- **PENG QI et al.** Answering complex open-domain questions through iterative query generation. *EMNLP,* 2019
- **AKARI ASAI et al.** *Learning to Retrieve Reasoning Paths over Wikipedia Graph for Question Answering*
- **ZHILIN YANG et al.** *XLNet: Generalized Autoregressive Pretraining for Language Understanding,* 2019
- **ASHISH VASWANI et al.** Advances in neural information processing systems. *Attention is all you need,* 2017
- **ANKIT CHADHA ; REWA SOOD.** *BERTQA -- Attention on Steroids*
- **ZHILIN YANG et al.** HotpotQA: A dataset for diverse, explainable multi-hop question answering. *EMNLP,* 2018
- **YUWEI FANG et al.** *Hierarchical graph network for multi-hop question answering,* 2019
- **YIXIN NIE et al.** Revealing the importance of semantic retrieval for machine reading at scale. *EMNLP,* 2019